# EUROPEAN PATENT APPLICATION

(11) **EP 4 674 671 A1**
(43) Date of publication of application: **07.01.2026**
(21) Application number: 23924947.7
(22) Date of filing: 17.10.2023
(51) Int. Cl.: B60L 7/10, B60T 8/176

(54) **REGENERATIVE BRAKING ANTI-LOCK CONTROL METHOD, DEVICE AND SYSTEM FOR VEHICLE, AND VEHICLE**

(30) Priority: 27.02.2023 CN 202310222777
(71) Applicant: BYD Company Limited, Shenzhen, Guangdong 518118 (CN)
(72) Inventor: LIU, Che, Shenzhen, Guangdong 518118 (CN); LU, Guoxiang, Shenzhen, Guangdong 518118 (CN); ZHOU, Caifeng, Shenzhen, Guangdong 518118 (CN)
(74) Representative: Mathys & Squire
(86) International application number: PCT/CN2023/124886
(87) International publication number: WO 2024/178993

(57) **Abstract**

A regenerative braking anti-lock control method, device, system for a vehicle, and the vehicle, which relates to the field of vehicle technology. The method comprises: in response to the required regenerative torque of the plurality of wheels, a braking state of the hydraulic brake module, and a locking tendency of at least one of the wheels meeting a first preset condition, activating a regenerative braking anti-lock mode; wherein, the braking state of the hydraulic brake module comprises the state of a hydraulic anti-lock brake unit, and the first preset condition comprises: the state of the hydraulic anti-lock brake unit is in a fault state; and adjusting the actual regenerative torque outputted by the motor according to the locking tendency and the required regenerative torque of the wheel in response to the regenerative braking anti-lock mode being in an activated state.

## Description

### CROSS-REFERENCE TO RELATED APPLICATIONS

The present disclosure claims priority to Chinese Patent Application No. 202310222777.1 filed on February 27, 2023, entitled "Regenerative Braking Anti-lock Control Method, Device, System for Vehicle and the Vehicle", which is incorporated herein by reference in its entirety.

### FIELD

The present disclosure relates to the field of vehicle technology, and in particular to a regenerative braking anti-lock control method, device, system for a vehicle, and the vehicle.

### BACKGROUND

With the rapid development of economy and technology, vehicles have become an essential part of people's daily lives. During the driving process, vehicles may inevitably experience failures due to various reasons.

The automobile braking system is one of the most important systems in a vehicle. Any failure may affect vehicle stability. For example, when the anti-lock brake system (ABS) of the automobile braking system fails, vehicle stability will be reduced or even out of control.

Vehicle stability is closely related to people's personal and property safety. Therefore, when a brake failure occurs, how to deal with the brake failure to improve vehicle driving stability is a technical issue that needs to be solved urgently.

### DISCLOSURE

The embodiments of the present specification provide a regenerative braking anti-lock control method, device, system for a vehicle, and the vehicle, aimed at improving vehicle driving stability.

The embodiment of the present specification provides a regenerative braking anti-lock control method for a vehicle, wherein, the vehicle comprises a plurality of wheels, a plurality of motors and a hydraulic brake module, each of the motors is configured to drive one of the wheels, and the method comprises: in response to a required regenerative torque of the plurality of wheels, a braking state of the hydraulic brake module, and a locking tendency of at least one of the wheels meeting a first preset condition, activating a regenerative braking anti-lock mode; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state; and adjusting the actual regenerative torque outputted by the motor according to the locking tendency and the required regenerative torque of the wheel in response to the regenerative braking anti-lock mode being in an activated state.

The embodiment of the present specification provides a regenerative braking anti-lock control device for a vehicle, wherein, the vehicle comprises a plurality of wheels, a plurality of motors and a hydraulic brake module, each of the motors is configured to drive one of the wheels, and the device comprises: an activation module, which is configured to activate a regenerative braking anti-lock mode in response to the required regenerative torque of the plurality of wheels, a braking state of the hydraulic brake module, and a locking tendency of at least one of the wheels meeting a first preset condition; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state; an adjustment module, which is configured to adjust the actual regenerative torque outputted by a motor according to the locking tendency and the required regenerative torque of the wheel in response to the regenerative braking anti-lock mode being in an activated state.

The embodiment of the present specification provides a regenerative braking anti-lock control system for a vehicle, the system comprises: a plurality of wheels, a plurality of motors and a hydraulic brake module of the vehicle, each of the motors is configured to drive one of the wheels, and the regenerative braking anti-lock control system is configured to implement any one of the above-mentioned regenerative braking anti-lock control methods for a vehicle.

The embodiment of the present specification provides a vehicle, the vehicle comprises any of the above-mentioned regenerative braking anti-lock control systems for a vehicle.

In the above-mentioned embodiments of the present specification, the vehicle comprises a plurality of wheels, a plurality of motors and a hydraulic brake module, each of the motors is configured to drive one of the wheels, and in response to the required regenerative torque of the plurality of wheels, a braking state of the hydraulic brake module, and a locking tendency of at least one of the wheels meeting a first preset condition, activating a regenerative braking anti-lock mode; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state; and in response to the regenerative braking anti-lock mode being in an activated state, adjusting the actual regenerative torque outputted by a motor according to the locking tendency and the required regenerative torque of the wheel, so that when the first preset condition is satisfied, the actual regenerative torque outputted by a motor is adjusted by activating the regenerative braking anti-lock mode, then the wheels are anti-lock controlled according to the adjusted actual regenerative torque, thereby vehicle driving stability can be improved.

### BRIEF DESCRIPTION OF THE DRAWINGS

The above-mentioned and/or additional features and advantages of the present disclosure will become apparent and easily understood from the description of the specific embodiments in conjunction with the following drawings. In the following drawings:
FIG. 1 is a schematic diagram of the structure of a regenerative braking anti-lock control system according to an embodiment of the present specification.
FIG. 2 is a schematic diagram of a regenerative braking anti-lock control system according to an embodiment of the present specification.
FIG. 3a is a schematic diagram of the degradation logic of the hydraulic brake module in the prior art according to an embodiment of the present specification.
FIG. 3b is a schematic diagram of the degradation logic of the regenerative braking anti-lock control system according to an embodiment of the present specification.
FIG. 4 is a flow chart of a regenerative braking anti-lock control method according to an embodiment of the present specification.
FIG. 5 is a logic diagram of a regenerative braking anti-lock control method according to an embodiment of the present specification.
FIG. 6a is a schematic diagram of the control effect of a regenerative braking anti-lock control system according to an embodiment of the present specification.
FIG. 6b is a schematic diagram of the control effect of a regenerative braking anti-lock control system according to an embodiment of the present specification.
FIG. 6c is a schematic diagram of the control effect of a regenerative braking anti-lock control system according to an embodiment of the present specification.
FIG. 7 is a schematic flow chart of a method for determining a wheel slip ratio according to an embodiment of the present specification.
FIG. 8 is a schematic diagram of the structure of a regenerative braking anti-lock control device according to an embodiment of the present specification.
FIG. 9 is a schematic diagram of the structure of a computer device according to an embodiment of the present specification.

### DETAILED DESCRIPTION

The specific embodiment of the present disclosure is described in detail below, examples of which are shown in the accompanying drawings, wherein, the same or similar symbols referred represent the same or similar elements or elements with the same or similar functions. The specific embodiment described herein with reference to the accompanying drawings are exemplary and are intended to explain the present disclosure, and cannot be construed as a limitation on the present disclosure.

When a wheel of a vehicle is momentarily lifting off the ground, such as when a vehicle is braking, sliding on a low-adhesion road surface, or leaving a speed bump, the wheels are prone to locking due to low road adhesion. If the anti-lock braking control function of the vehicle fails at this time, it is crucial to ensure the driving stability of the vehicle. In the field of new energy vehicles, in related art, when a vehicle needs to perform anti-lock braking control but the hydraulic anti-lock braking function of the hydraulic brake module of the vehicle fails, vehicle driving stability is usually ensured by exiting regenerative braking or by reducing the intensity of regenerative braking, for example, a stability coefficient is superimposed on the original regenerative braking intensity to reduce the intensity of regenerative braking. However, in related art, if regenerative braking is suddenly canceled, it will cause the vehicle to surge forward due to a sudden decrease in the deceleration of the entire vehicle, which will make the driver feel discomfort and even lead to potential risks; in addition, the related art cannot handle changes in road adhesion well. When the vehicle leaves a low-adhesion road surface, the regenerative braking intensity cannot be restored to the normal level again, causing a decrease in regenerative efficiency and discomfort to the driver when operating the throttle.

Therefore, in order to improve vehicle driving stability when the anti-lock brake system (ABS) in the hydraulic brake module of the vehicle fails or does not work, a regenerative braking anti-lock mode can be activated in response to the required regenerative torque of the plurality of wheels, a braking state of the hydraulic brake module, and a locking tendency of at least one of the wheels meeting a first preset condition. When the regenerative braking anti-lock mode is activated, the actual regenerative torque outputted by a motor is adjusted according to the locking tendency and the required regenerative torque of the wheel. The wheels are anti-lock controlled by the adjusted actual regenerative torque, thereby vehicle driving stability can be improved.

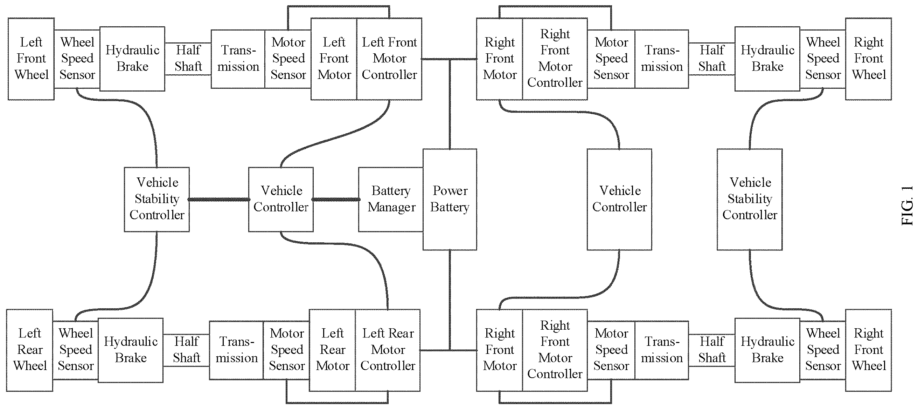

The embodiment of the present specification provides a regenerative braking anti-lock control system for a vehicle, referring to FIG. 1, the system comprises: a plurality of wheels, a plurality of motors and a hydraulic brake module of the vehicle, each of the motors is configured to drive one of the wheels.

Wherein, the hydraulic brake module can comprise a vehicle stability controller, a plurality of hydraulic brakes, and a plurality of wheel speed sensors. Specifically, the vehicle stability controller can be a controller for controlling the hydraulic brake module to perform hydraulic braking of the vehicle, that is, a hydraulic brake controller. Each of wheel speed sensors is configured to detect the wheel speed of a wheel, and the detected wheel speed of the vehicle can be sent to the vehicle controller. The vehicle stability controller can provide communications links to a plurality of wheel speed sensors, and the vehicle stability controller can determine the hydraulic braking force according to the detected wheel speed and apply the hydraulic braking force to the wheel through the hydraulic brake. The hydraulic brake is an actuator of the hydraulic brake module, and the hydraulic brake can convert the brake fluid pressure which is established by the vehicle stability controller to control the relevant mechanism into the hydraulic braking force on the wheel.

In this embodiment, the regenerative braking anti-lock control system can further include a vehicle controller, a plurality of motor controllers, a plurality of transmission mechanisms, a plurality of motor speed sensors, a power battery, and a battery manager. The vehicle controller can provide communications links to the vehicle stability controller, the battery manager, and a plurality of motor controllers.

Each motor controller is configured to control a motor. Each motor is configured to drive a wheel through a transmission mechanism. Each motor speed sensor is configured to detect the motor speed of a motor. Each motor controller can send the motor speed detected by the motor speed sensor to the vehicle controller. The vehicle controller can instruct each motor controller to control a motor to drive a wheel. For example, the vehicle controller can instruct each motor controller to control a motor to output regenerative braking force to a wheel through a transmission mechanism. Specifically, each transmission mechanism includes a transmission half-shaft and a transmission, each motor establishes a torque transmission relationship with a wheel through a transmission mechanism, and each motor speed sensor establishes a motor speed-wheel speed conversion relationship with a wheel speed. A plurality of wheels can comprise two front axle wheels and two rear axle wheels, namely, a left front wheel and a right front wheel, as well as a left rear wheel and a right rear wheel. A plurality of motors can comprise two front axle motors and two rear axle motors, namely, a left front motor and a right front motor, as well as a left rear motor and a right rear motor. A plurality of motor controllers can comprise a left front motor controller corresponding to the left front motor, a right front motor controller corresponding to the right front motor, a left rear motor controller corresponding to the left rear motor, and a right rear motor controller corresponding to the right rear motor.

A power battery can be an electric energy storage device installed in the vehicle, which can provide power to each motor controller, each motor, and other modules or devices requiring power support, and can also store power generated by regenerative braking from any of the motors or other forms of input power. A battery manager can control the power battery to establish electrical connections with each motor controller, each motor, and other modules or devices requiring power support, and can collect information related to the battery modules of the power battery to monitor the power battery status, and calculate the current power information of the power battery, and send the calculated current power information to the vehicle controller.

A motor controller can convert electrical energy of the power battery into kinetic energy through a motor when the vehicle is in a driving condition, and output it to the corresponding wheel through the transmission mechanism. It can also convert kinetic energy transmitted from a wheel through the transmission mechanism into electrical energy during regenerative braking and then transmit it to the power battery for storage.

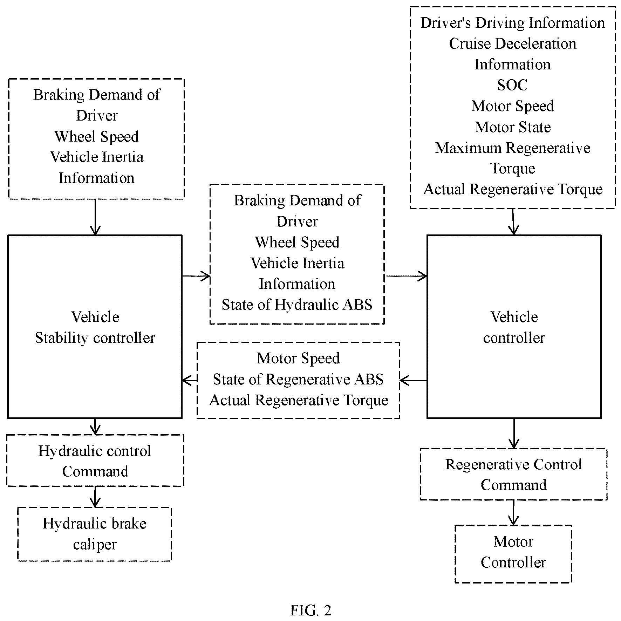

In this embodiment, referring to FIG. 2, the vehicle stability controller can obtain any one of a braking demand of a driver, wheel speed detected by the wheel speed sensor, vehicle inertia information, and the state of the hydraulic anti-lock brake unit (ABS) in the hydraulic brake module, wherein, the vehicle inertia information can comprise a preset deceleration of the vehicle, and the braking demand of the driver can comprise the braking depth of the brake pedal. The state of the hydraulic anti-lock brake unit can indicate whether the hydraulic anti-lock brake unit in the hydraulic brake module is activated, or whether the anti-lock function of the hydraulic anti-lock brake unit is triggered, or whether the hydraulic anti-lock brake unit has broken down. After obtaining any one of a braking demand of a driver, wheel speed, vehicle inertia information, and the state of the hydraulic anti-lock brake unit, the vehicle stability controller can determine the stability control demand and braking demand in combination with current operating condition, send out a hydraulic control instruction, and instruct the hydraulic brake caliper of the hydraulic brake in the hydraulic brake module to generate hydraulic braking according to the hydraulic control instruction, output hydraulic braking force to the wheel, in addition, when anti-lock control is required and the hydraulic anti-lock brake unit of the hydraulic brake module has not broken down, hydraulic anti-lock braking control can be performed on the wheel according to the vehicle stability control demand.

In this embodiment, still referring to FIG. 2, a vehicle controller can obtain any one of a driver's driving demand, the state of charge (SOC) of power battery, motor speed detected by the motor sensor, cruise deceleration information, the status of the motor, the maximum regenerative torque of the motor, and the actual regenerative torque of the motor, wherein, the driver's driving demand can comprise the throttle depth of the accelerator pedal, the cruise deceleration information can comprise a preset deceleration, and the status of the motor can indicate whether the motor has broken down. After obtaining any one of a driver's driving demand, the SOC of the power battery, motor speed detected by the motor sensor, cruise deceleration information, the status of the motor, the maximum regenerative torque of the motor, and the actual regenerative torque of the motor, the vehicle controller can send out a regenerative control instruction in combination with current working condition, and instruct the motor controller to control the motor to output the actual regenerative torque according to the regenerative control instruction, so that a regenerative braking can be applied to the wheel according to the actual regenerative torque outputted by the motor, in addition, when regenerative braking anti-lock control is required, the motor controller can be instructed to adjust the actual regenerative torque outputted by the motor according to the regenerative control instruction, so that a regenerative braking can be applied to the wheel according to the actual regenerative torque outputted by the motor. The situation when regenerative braking anti-lock control is required refers to the situation when anti-lock braking control is required but the hydraulic brake module is not activated, or the hydraulic brake module is activated but the hydraulic anti-lock brake unit has broken down.

In this embodiment, still referring to FIG. 2, a vehicle controller can send the motor speed detected by the motor sensor to the vehicle stability controller. The vehicle controller can determine the regenerative braking anti-lock control state when the vehicle controller instructs the motor controller to control the motor to output the actual regenerative torque according to the regenerative control instruction, which is used to apply regenerative braking anti-lock to the wheel, and the vehicle controller can send the regenerative braking anti-lock control state and the actual regenerative torque to the vehicle stability controller, so that the vehicle stability controller can determine the braking demand according to the regenerative braking anti-lock control state and the actual regenerative torque, and perform hydraulic braking control according to the braking demand.

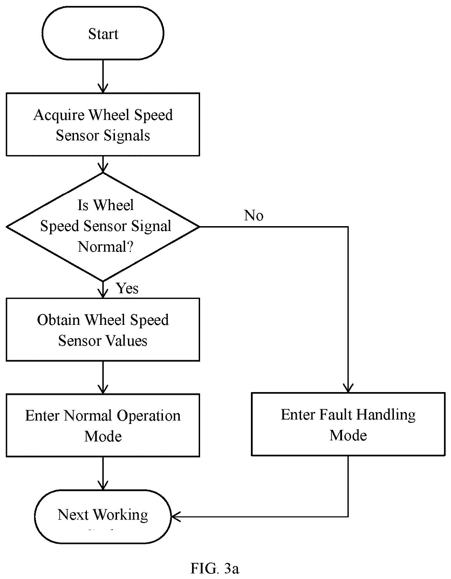

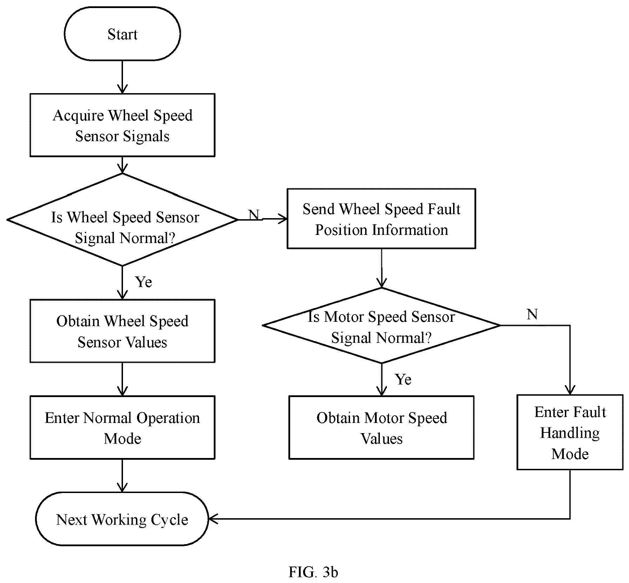

In this embodiment, referring to FIG. 3a, which shows a schematic diagram of the degradation logic of the hydraulic brake module when dealing with breakdowns in the related art, the vehicle collects wheel speed through the wheel speed sensor, when there is a fault in signal circuit of the wheel speed sensor, the hydraulic brake module switches to a fault processing mode, which will lead to the loss of the hydraulic anti-lock braking control function of the vehicle. Still referring to FIG. 3b, which shows a schematic diagram of the degradation logic of the regenerative braking anti-lock control system when dealing with breakdowns in this embodiment, in the regenerative braking anti-lock control system, when there is a fault in signal circuit of the wheel speed sensor, the regenerative braking anti-lock control system can obtain a motor speed, and the motor speed can be converted into a wheel speed through the motor speed-wheel speed conversion relationship, so that there is no need to switch to the fault processing mode immediately, the loss of related functions caused by fault processing can be avoided; and only the fault position information of the wheel speed sensor needs to be sent out, which is convenient for subsequent related processing, so that the robustness of the braking control or the braking anti-lock control is enhanced.

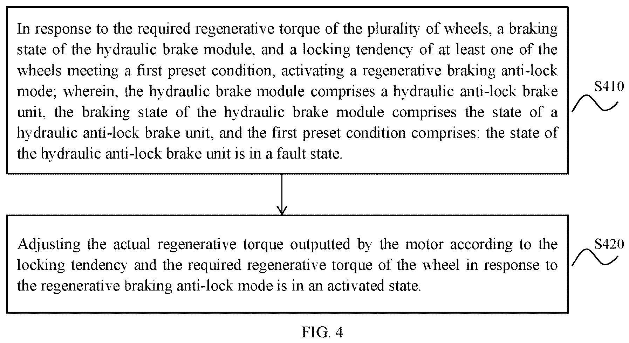

The embodiment of the present specification provides a regenerative braking anti-lock control method for a vehicle, referring to FIG. 4, which is a flow chart of a regenerative braking anti-lock control method according to an embodiment of the present specification, this embodiment provides operation steps as the method shown in the flow chart, but more or fewer operation steps can be included in the method according to conventional or non-creative labor. The step sequence listed in the embodiment is only one execution strategy among numerous step execution sequences, but it does not mean that it is the only execution sequence. When the system or server product is executed in practice, it can be executed in sequence or in parallel according to the method shown in the embodiment (for example, a parallel processor or a multi-threaded processing environment). The regenerative braking anti-lock control method can be applied to the vehicle controller of the regenerative braking anti-lock control system, as shown in FIG. 4, and the regenerative braking anti-lock control method can comprise the following steps:

Step S410: in response to the required regenerative torque of the plurality of wheels, a braking state of the hydraulic brake module, and a locking tendency of at least one of the wheels meeting a first preset condition, activating a regenerative braking anti-lock mode; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state.

In some cases, any wheel of the vehicle needs to be controlled by anti-lock braking to prevent the wheel from locking, however, the hydraulic anti-lock brake unit (ABS) in the hydraulic brake module of the vehicle can fail to control the wheel by hydraulic anti-lock braking, to improve vehicle driving stability, a regenerative braking anti-lock control can be applied to the wheel by activating the regenerative braking anti-lock mode to control the motor to output the actual regenerative torque.

In this embodiment, the first preset condition can refer to an activation condition of the regenerative braking anti-lock mode. Whether to activate the regenerative braking anti-lock mode is determined according to whether the required regenerative torque of the plurality of wheels, the braking state of a hydraulic brake module and the locking tendency of at least one of the wheels meet a first preset condition. Specifically, the regenerative braking anti-lock mode can be activated in response to the required regenerative torque of the plurality of wheels, the braking state of a hydraulic brake module and the locking tendency of at least one of the wheels meeting a first preset condition. As an example, the braking state of the hydraulic brake module can comprise: the state of a hydraulic anti-lock brake unit, and the first preset condition can comprise: the state of the hydraulic anti-lock brake unit is in a fault state, then the braking state of the hydraulic brake module meeting the first preset condition can comprise: the state of the hydraulic anti-lock brake unit is in a fault state.

Step S420: adjusting the actual regenerative torque outputted by the motor according to the locking tendency and the required regenerative torque of the wheel in response to the regenerative braking anti-lock mode being in an activated state.

In this embodiment, after the regenerative braking anti-lock mode is activated according to the required regenerative torque of the plurality of wheels, the braking state of a hydraulic anti-lock brake unit and the locking tendency of at least one of the wheels, the actual regenerative torque outputted by the motor can be adjusted according to the locking tendency of the wheel and the required regenerative torque. Specifically, for example, in response to the locking tendency of the wheel tending to lock up or not tending to lock up, the actual regenerative torque outputted by the motor can be adjusted according to the required regenerative torque, so that the regenerative braking anti-lock control can be applied to the wheel to prevent the wheel from locking.

In the above embodiment, when any wheel of the vehicle needs anti-lock braking control but the hydraulic anti-lock brake unit (ABS) in the hydraulic brake module of the vehicle fails and hydraulic anti-lock braking control is unable to applied to the wheel, the regenerative braking anti-lock braking mode can be activated to control the motor to output actual regenerative torque to perform regenerative braking anti-lock control on the wheel, thereby vehicle driving stability can be improved and the driving safety of the vehicle can be enhanced as well.

In some embodiments, the braking state of the hydraulic brake module can also comprise a braking demand of a driver. Any one of the following situations meet the first preset condition:
(1) a sum of the required regenerative torques of the plurality of wheels is greater than zero, the locking tendency of the wheel tends to lock up, and the braking demand of the driver is less than or equal to a preset braking demand threshold;
(2) the sum of the required regenerative torques of the plurality of wheels is greater than zero, the locking tendency of the wheel tends to lock up, and the braking demand of the driver is greater than a preset braking demand threshold and the state of the hydraulic anti-lock brake unit is in a fault state.

In some cases, when any wheel of the vehicle needs anti-lock braking control to prevent the wheel from locking but the hydraulic brake module of the vehicle cannot be started or not operate effectively, which leads to a result that hydraulic anti-lock braking control is unable to applied to the wheel by the hydraulic anti-lock brake unit, although the hydraulic anti-lock brake unit can be in a normal state at this time. For example, when a vehicle is in cruise control deceleration or in coasting regenerative braking, whether the hydraulic brake module being started or operating effectively is related to the braking demand of the driver. In order to further improve the driving stability of the vehicle, whether to activate the regenerative braking anti-lock mode can also be determined according to the braking demand of the driver.

In this embodiment, the first preset condition can be satisfied when the sum of the required regenerative torques of the plurality of wheels is greater than zero, the locking tendency of the wheel tends to lock up, and the braking demand of the driver is less than or equal to a preset braking demand threshold. In addition, the first preset condition can also be satisfied when the sum of the required regenerative torques of the plurality of wheels is greater than zero, the locking tendency of the wheel tends to lock up, and the braking demand of the driver is greater than a preset braking demand threshold and the state of the hydraulic anti-lock brake unit is in a fault state. Exemplarily, the vehicle comprises a plurality of wheels, and the sum of the required regenerative torques of a plurality of wheels can refer to the required regenerative torque of the vehicle. Exemplarily, the sum of the required regenerative torques of the plurality of wheels is greater than zero, indicating that the vehicle can be in a driving condition, or the current battery charge of the power battery in the vehicle is sufficient, or the hydraulic anti-lock brake unit of the vehicle is normally started, etc.

In the above embodiment, whether to activate the regenerative braking anti-lock mode is determined according to the sum of the required regenerative torques of a plurality of wheels, the locking tendency of the wheel, the braking demand of the driver, and the state of the hydraulic anti-lock brake unit; the regenerative braking anti-lock mode is activated to control the motor to output the actual regenerative torque to perform braking anti-lock control on the wheel, when any wheel of the vehicle needs anti-lock braking control but the hydraulic anti-lock brake unit in the hydraulic brake module of the vehicle fails and hydraulic anti-lock braking control is unable to be applied to the wheel, or when any wheel of the vehicle needs anti-lock braking control but the hydraulic brake module of the vehicle cannot be started or not operate effectively, which leads to a result that hydraulic anti-lock braking control is unable to be applied to the wheel by the hydraulic anti-lock brake unit, thereby the driving stability of and the driving safety of the vehicle can be further improved.

In some embodiments, the braking demand of the driver can comprise a brake pedal depth. The preset braking demand threshold can comprise a preset brake pedal depth threshold.

In some embodiments, the braking demand of the driver can comprise a brake pedal force. The preset braking demand threshold can comprise a preset brake pedal force threshold.

In some embodiments, the braking demand of the driver can be determined according to the brake pedal depth and the brake pedal force. Accordingly, the preset braking demand threshold can be determined comprehensively according to the brake pedal depth and the brake pedal force.

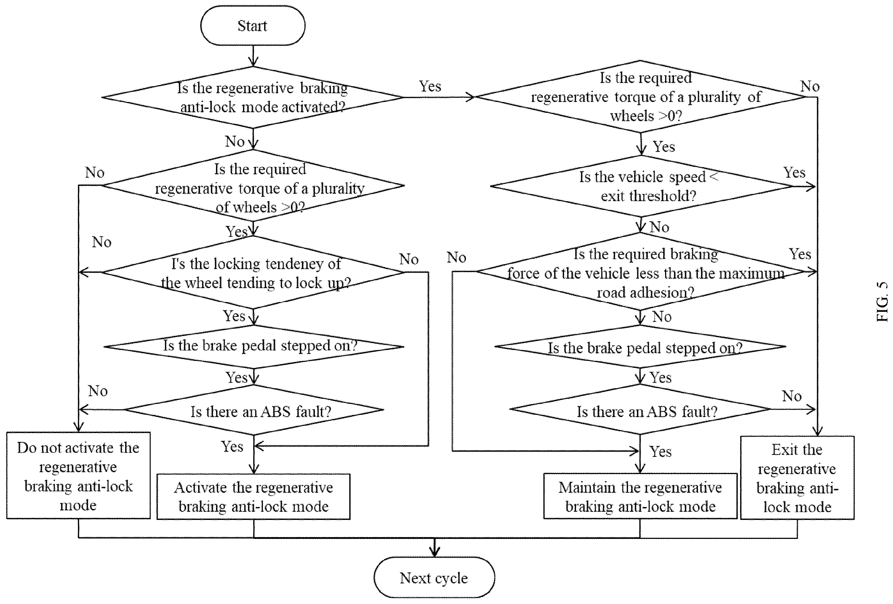

For example, referring to FIG. 5, which shows a logic diagram of a regenerative braking anti-lock control method. Any one of the following situations meets the first preset condition:
(1) a sum of the required regenerative torques of the plurality of wheels is greater than zero, the locking tendency of the wheel tends to lock up, and the braking depth of the brake pedal is less than or equal to a preset braking depth threshold;
(2) the sum of the required regenerative torques of the plurality of wheels is greater than zero, the locking tendency of the wheel tends to lock up, and the braking depth of the brake pedal is greater than a preset braking depth threshold and the state of the hydraulic anti-lock brake unit is in a fault state.

Since there is a braking idle stroke when stepping on the brake pedal, it can be determined that the brake pedal is not stepped on when the braking depth of the brake pedal is less than or equal to the preset braking depth threshold, that is, the braking demand of the driver is zero or there is no driver's braking demand. Wherein, the preset braking depth threshold can refer to the distance of the braking idle stroke.

In some embodiments, the braking idle stroke cannot be considered, that is, the preset braking depth threshold can be zero.

In some embodiments, the regenerative braking anti-lock control method can further comprise: in response to the regenerative braking anti-lock mode being in an activated state, and the required regenerative braking torque of the wheel, vehicle speed, the braking state, and the locking tendency of the wheel meeting a second preset condition, exiting the regenerative braking anti-lock mode.

In some cases, after activating the regenerative braking anti-lock mode to apply regenerative braking anti-lock control to the wheel and adjusting the locking tendency of the wheel to not tending to lock up, the regenerative braking anti-lock mode can be exited in time to stop regenerative braking anti-lock control on the wheel.

In this embodiment, the second preset condition can refer to an exit condition of the regenerative braking anti-lock mode. To exit the regenerative braking anti-lock mode or not can be determined by whether the required regenerative braking torque of the wheel, vehicle speed, the braking state, and the locking tendency of the wheel meet a second preset condition. Specifically, the regenerative braking anti-lock mode can be exited in response to the required regenerative braking torque of the wheel, vehicle speed, the braking state, and the locking tendency of the wheel meeting a second preset condition.

In the above-mentioned embodiment, when applying regenerative braking anti-lock control to the wheel and adjusting the locking tendency of the wheel to not tending to lock up, the regenerative braking anti-lock mode can be exited in time to stop regenerative braking anti-lock control on the wheel which is determined by whether the required regenerative braking torque of the wheel, vehicle speed, the braking state, and the locking tendency of the wheel meet a second preset condition.

In some embodiments, referring to FIG. 5, any one of the following situations meets the second preset condition:
(1) the sum of the required regenerative torques of a plurality of wheels is zero;
(2) the vehicle speed is less than a preset exit speed threshold;
(3) the braking demand of the driver is greater than or equal to a preset braking demand threshold, and the hydraulic anti-lock brake unit is in a normal state;
(4) the locking tendency of the wheel does not tend to lock up.

The preset exit speed threshold of the vehicle can be a lower preset vehicle speed, when the vehicle is driving at a lower speed than the preset vehicle exit speed threshold, it can be determined that the vehicle is controllable, therefore, the regenerative braking anti-lock mode can be exited.

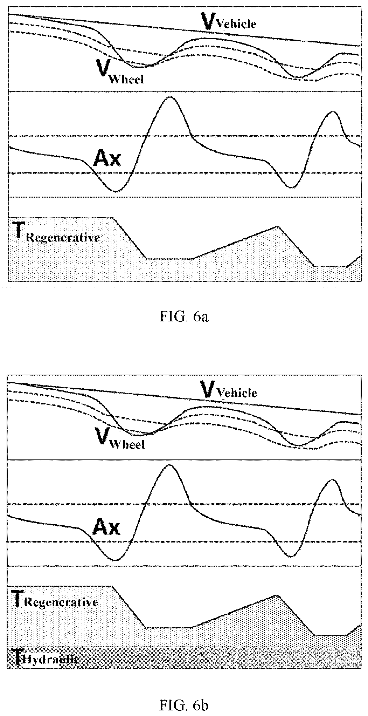

Exemplarily, referring to FIG. 6a, which shows a schematic diagram of the control effect of a regenerative braking anti-lock control system when the driver releases the accelerator and does not step on the brake pedal, and the regenerative braking anti-lock control is activated. At this time, the hydraulic brake module does not intervene in hydraulic brake control. The required braking force of the wheel only comprises the regenerative braking force determined according to the required regenerative torque, in response to the maximum road adhesion being less than the required braking force of the wheel, the actual regenerative torque outputted by the motor can be actively adjusted to keep the wheel in a critical locking slip rolling state to prevent the wheel from locking, which can ensure the driving stability and driving safety of the vehicle. The actual regenerative torque outputted by the motor is actively adjusted to keep the wheel in a critical locking slip rolling state. During the process of actively adjusting the actual regenerative torque outputted by the motor to keep the wheel in a critical locking slip rolling state, whether the wheel is in the critical rolling state can be determined by wheel deceleration Ax, wheel speed V_{wheel}, and vehicle speed V_{vehicle}, etc.

In the above embodiment, when the hydraulic brake module does not intervene in hydraulic brake control, by activating the regenerative braking anti-lock mode, the problem of insufficient deceleration during braking can be improved by the actual regenerative torque outputted by the motor in the absence of hydraulic braking force, and wheel locking caused by excessive regenerative torque intensity can be avoided by adjusting the actual regenerative torque outputted by the motor, thereby the requirements of both deceleration performance and safety performance can be satisfied, which allows the vehicle to perform regenerative braking anti-lock control without the intervention of hydraulic braking.

Exemplarily, referring to FIG. 6b, which shows a schematic diagram of the control effect of intervening regenerative braking anti-lock control system when the driver steps on the brake pedal and the anti-lock system in the hydraulic brake module cannot implement its function. In the working condition shown in FIG. 6b, the required braking force of the wheel includes hydraulic braking force and regenerative braking force determined according to the required regenerative torque. The hydraulic braking force cannot be adjusted due to the functional failure of the anti-lock system in the hydraulic brake module, in response to the maximum road adhesion being less than the required braking force of the wheel and the maximum road adhesion is greater than the hydraulic braking force, the actual regenerative torque outputted by the motor can be actively adjusted to keep the wheel in a critical locking slip rolling state to prevent the wheel from locking, which can ensure the driving stability and driving safety of the vehicle. During the process of actively adjusting the actual regenerative torque outputted by the motor to keep the wheel in a critical locking slip rolling state, whether the wheel is in the critical rolling state can be determined by wheel deceleration Ax, wheel speed V_{wheel}, and vehicle speed V_{vehicle}, etc. In this way, in the event of loss of hydraulic anti-lock brake control function during hydraulic braking, regenerative braking anti-lock control can still be performed by actively adjusting the actual regenerative torque outputted by the motor, which provides a regenerative braking anti-lock control function equivalent to a hydraulic anti-lock brake control function.

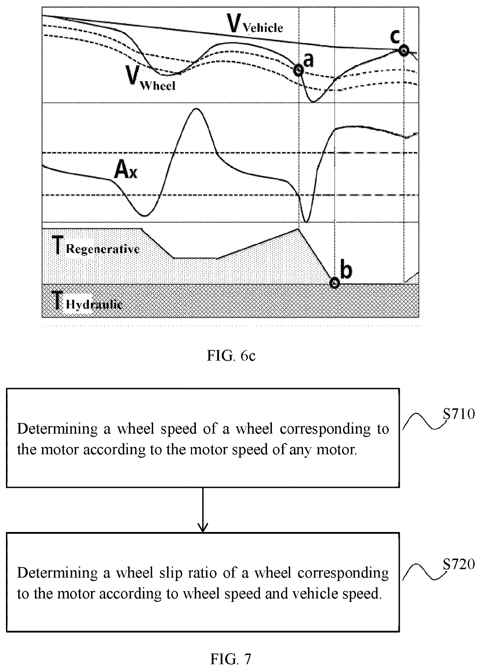

Exemplarily, referring to FIG. 6c, which shows a schematic diagram of the control effect of intervening regenerative braking anti-lock control system when the driver steps on the brake pedal and the anti-lock system in the hydraulic brake module cannot implement its function. In the working condition shown in FIG. 6c, the vehicle is traveling on a road surface with a changing adhesion coefficient, and the required braking force of the wheel comprises hydraulic braking force and regenerative braking force determined according to the required regenerative torque. The hydraulic braking force cannot be adjusted due to the functional failure of the anti-lock system in the hydraulic brake module. At this time, if the maximum road adhesion is less than the hydraulic braking force, it indicates that the actual regenerative torque outputted by the motor cannot adjust the locking tendency of the wheel, and the actual regenerative torque outputted by the motor can be adjusted to zero until the maximum road adhesion is greater than the hydraulic braking force. In response to the maximum road adhesion being greater than the hydraulic braking force, the actual regenerative torque outputted by the motor can be adjusted continually to apply regenerative braking anti-lock control to the wheel according to the target regenerative torque. For example, when the vehicle reaches point a, it enters a low-adhesion road surface, leading to an aggravated tendency of wheel locking, the section from a to b is the adjustment process of regenerative braking anti-lock control, the wheel can be locked only by hydraulic braking force at this time. Due to the ABS failure, hydraulic braking force T_{hydraulic} cannot be adjusted, so T_{hydraulic} is directly related to the braking depth, and it is mechanically adjustment, the regenerative braking force T_{regenerative} = required braking force - hydraulic braking force T_{hydraulic} at this time. Therefore, the actual regenerative torque can be adjusted to zero during the section from b to c, when the vehicle reaches point c, the actual regenerative torque outputted by the motor can be actively adjusted to keep the wheel in a critical locking slip rolling state to prevent the wheel from locking due to the increase in the adhesion coefficient of the road surface, which can ensure the driving stability and driving safety of the vehicle.

In the above embodiment, the actual regenerative torque can be adjusted when the adhesion coefficient of the road surface on which the vehicle is traveling changes, which improves regenerative efficiency partly, can adapt effectively to changes in adhesion coefficient of the road surface, and expands the applicable scenarios of the anti-lock control on the vehicle.

In some embodiments, the regenerative braking anti-lock control method can further comprise: determining the locking tendency of the plurality of wheels according to the required braking force of the plurality of wheels and the maximum road adhesion of the plurality of wheels.

In some cases, the locking tendency of the wheel can be determined according to the required braking force of the wheel and the maximum road adhesion of the wheel.

In this embodiment, when the regenerative braking anti-lock mode is activated, the locking tendency of a plurality of wheels can be determined according to the required braking force of a plurality of wheels and the maximum road adhesion of a plurality of wheels. Specifically, the locking tendency of a plurality of wheels which is applied to determine whether the second preset condition is satisfied can be determined according to the required braking force of a plurality of wheels and the maximum road adhesion of a plurality of wheels.

In some embodiments, the locking tendency of a plurality of wheels can be determined according to the required braking force of a plurality of wheels and the maximum road adhesion of a plurality of wheels, which can comprise: determining the locking tendency of the wheel as not tending to lock up in response to the required braking force of any of the wheels being less than the corresponding maximum road adhesion.

In some embodiments, the regenerative braking anti-lock control method can further comprise: determining the required braking force of a plurality of wheels according to the current weight and preset deceleration of the vehicle in response to the regenerative braking anti-lock mode being in an activated state. Specifically, for example, the preset deceleration of the vehicle can be a preset deceleration which is determined by the vehicle in a sliding regenerative state, and the preset deceleration can be calibrated and selected according to different road adhesion coefficients.

In some embodiments, a plurality of wheels can comprise two front axle wheels and two rear axle wheels. Determining the required braking force of a plurality of wheels according to the current weight and preset deceleration of the vehicle can comprise: determining the sum of the required braking forces of a plurality of wheels according to the current weight and preset deceleration of the vehicle, and distributing the sum of the required braking forces to a plurality of wheels evenly.

The sum of the required braking forces of a plurality of wheels can refer to the required braking force of the vehicle.

In this embodiment, the sum of the required braking forces of a plurality of wheels can be determined according to the current weight and preset deceleration of the vehicle, that is, the required braking force of the vehicle can be determined, and the sum of the required braking forces of a plurality of wheels can be evenly distributed to a plurality of wheels to determine the required braking force of a plurality of wheels.

In some embodiments, determining the required braking force of a plurality of wheels according to the current weight and preset deceleration of the vehicle can comprise: determining the sum of the required braking forces of a plurality of wheels according to the current weight and preset deceleration of the vehicle, determining a first distribution ratio according to the current weight and preset deceleration of the vehicle, determining the sum of the required braking forces of the two front axle wheels and the sum of the required braking forces of the two rear axle wheels according to the first distribution ratio and the sum of the required braking forces of a plurality of wheels, distributing the sum of the required braking forces of the two front axle wheels to the two front axle wheels evenly, and distributing the sum of the required braking forces of the two rear axle wheels to the two rear axle wheels evenly. Specifically, the sum of the required braking forces of a plurality of wheels can be determined according to the current weight and preset deceleration of the vehicle, the first distribution ratio can be obtained by querying a braking force distribution sheet according to the current weight and preset deceleration of the vehicle, the sum of the required braking forces of the two front axle wheels and the sum of the required braking forces of the two rear axle wheels can be determined according to the first distribution ratio and the sum of the required braking forces of a plurality of wheels, the sum of the required braking forces of the two front axle wheels can be evenly distributed to the two front axle wheels, and the sum of the required braking forces of the two rear axle wheels can be evenly distributed to the two rear axle wheels. Exemplarily, the braking force distribution sheet can be calibrated according to the principle of economic optimization.

In some embodiments, the regenerative braking anti-lock control method can further comprises: determining the required regenerative torque of the plurality of wheels according to the required braking force of a plurality of wheels and the braking demand of the driver.

In some cases, after the required braking force of a plurality of wheels and the braking demand of the driver are determined, the required regenerative torque of the plurality of wheels can be determined according to the required braking force of a plurality of wheels and the braking demand of the driver.

In this embodiment, the required regenerative torque of the plurality of wheels can be determined according to the required braking force of a plurality of wheels and the braking demand of the driver. Specifically, for example, the braking demand of the driver can comprise the braking depth of the brake pedal, the hydraulic braking forces of a plurality of wheels can be determined according to the braking depth of the brake pedal, and the required regenerative torque of the plurality of wheels can be determined according to the hydraulic braking forces of a plurality of wheels, the required braking force of a plurality of wheels, and the wheel radii of a plurality of wheels. Exemplarily, in response to the required braking force being greater than the hydraulic braking force of the wheel, the required regenerative torque of the wheel can be determined by the following formula: required regenerative torque = (required braking force - hydraulic braking force) × wheel radius. In response to the required braking force of the wheel being less than or equal to the hydraulic braking force of the wheel, the required regenerative torque of the wheel is determined to be zero.

In some embodiments, the regenerative braking anti-lock control method can further comprise: determining the locking tendency of a wheel according to one or more of wheel slip ratio, wheel deceleration, and wheel deceleration change rate of any wheel.

In some cases, the locking tendency of a wheel can be determined according to one or more of wheel slip ratio, wheel deceleration, and wheel deceleration change rate of any wheel.

In this embodiment, when the regenerative braking anti-lock mode is not activated, the locking tendency of a wheel can be determined according to one or more of wheel slip ratio, wheel deceleration, and wheel deceleration change rate of any wheel. Specifically, the locking tendency of at least one of the wheels applied to determine whether the first preset condition is satisfied can be determined according to wheel slip ratio and/or wheel deceleration of any wheel.

In some embodiments, determining the locking tendency of the wheel according to one or more of wheel slip ratio, wheel deceleration, and wheel deceleration change rate of any wheel can comprise:
(1) determining the locking tendency of the wheel as tending to lock up in response to the slip ratio of any wheel being greater than or equal to a first slip ratio threshold;
(2) determining the locking tendency of the wheel as tending to lock up in response to the deceleration of any wheel being less than or equal to a first deceleration threshold;
(3) determining the locking tendency of the wheel as tending to lock up in response to the deceleration change rate of any wheel being less than or equal to a deceleration change rate threshold;
(4) determining the locking tendency of the wheel as tending to lock up in response to the slip ratio of any wheel being greater than or equal to a second slip ratio threshold and the wheel deceleration is less than or equal to a second deceleration threshold;
wherein, the first slip ratio threshold is greater than the second slip ratio threshold, and the first deceleration threshold is less than the second deceleration threshold.

Exemplarily, the first slip ratio threshold can be 15% to 20%, the second slip ratio threshold can be 8% to 12%, the first deceleration threshold can be -5m/s² , and the second deceleration threshold can be -4m/s² .

Accordingly, in response to the slip ratio or the deceleration of any wheel not satisfying the above three conditions, the locking tendency of the wheel can be determined as not tending to lock up.

It should be noted that the threshold values of the first slip ratio threshold, the second slip ratio threshold, the first deceleration threshold, the second deceleration threshold, and the deceleration change rate threshold can be determined according to road adhesion conditions such as road adhesion coefficient and vehicle speed.

In some embodiments, referring to FIG. 7, which shows a schematic flow chart of a method for determining a wheel slip ratio. The regenerative braking anti-lock control method can further comprise the following steps.

Step S710: determining a wheel speed of a wheel corresponding to the motor according to the motor speed of any motor.

In some cases, the wheel slip ratio of a wheel can be determined according to wheel speed and vehicle speed. However, when calculating the wheel slip ratio, there can be a wheel speed sensor failure or a fault in signal circuit of the wheel speed sensor, which can make it impossible to identify and determine the wheel speed and then make it impossible to determine the wheel slip ratio. To reduce the probability of the regenerative braking anti-lock control system failure due to inability to determine the wheel speed caused by a wheel speed sensor circuit failure, a motor speed-wheel speed conversion relationship can be established between a motor speed sensor and a wheel speed sensor. And a redundant wheel speed identification scheme can be formed to determine the wheel speed through this conversion relationship, thereby the robustness of the regenerative braking anti-lock control system is enhanced.

In this embodiment, a wheel speed of a wheel corresponding to the motor can be determined according to the motor speed of any motor. Specifically, for example, the motor speed of any motor can be obtained from a motor speed sensor corresponding to the motor, and the wheel speed of the wheel corresponding to the motor can be determined according to the motor speed and the motor speed-wheel speed conversion relationship between the motor and the corresponding wheel.

Step S720: determining a wheel slip ratio of a wheel corresponding to the motor according to wheel speed and vehicle speed.

In this embodiment, after determining the wheel speed according to the corresponding motor speed, the wheel slip ratio of the wheel corresponding to the motor can be determined according to wheel speed and vehicle speed. The vehicle speed can be obtained from a vehicle speed sensor of the vehicle.

Therein, the wheel slip ratio can represent the proportion of the sliding component of during the wheel motion. As an example, the wheel slip ratio can be obtained by subtracting the vehicle speed from the wheel speed to obtain a difference, dividing the difference by the vehicle speed to obtain a quotient, and then multiplying the quotient by 100%.

In one embodiment, the wheel speed of any wheel may also be acquired from a wheel speed sensor corresponding to the wheel, and the wheel speed can be determined according to wheel speed and vehicle speed.

In the above embodiment, a redundant wheel speed identification scheme is formed to determine the wheel speed by establishing a motor speed-wheel speed conversion relationship between the motor speed sensor and the wheel speed sensor. This ensures that the wheel speed can be determined according to the motor speed when the wheel speed cannot be determined due to a wheel speed sensor failure or a fault in signal circuit of the wheel speed sensor, which reduces the probability of the regenerative braking anti-lock control system failure due to inability to determine the wheel speed caused by a wheel speed sensor circuit failure, thereby the robustness of the regenerative braking anti-lock control system is enhanced.

In some embodiments, in response to the regenerative braking anti-lock mode being in an activated state, adjusting the required regenerative torque according to the locking tendency of the wheel can comprise: in response to the regenerative braking anti-lock mode being in an activated state, reducing the actual regenerative torque according to a preset reduction rate until the locking tendency of the wheel is adjusted from tending to lock up to not tending to lock up.

In some embodiments, the regenerative braking anti-lock control method can further comprise: in response to the locking tendency of the wheel being adjusted from tending to lock up to not tending to lock up, stopping the reduction of the required regenerative torque and maintaining it for a preset time; in response to the locking tendency of the wheel remaining not tending to lock up within the preset time, increasing the actual regenerative torque according to a preset increase rate until the locking tendency of the wheel is tending to lock up or the actual regenerative torque is greater than or equal to the required regenerative torque.

In some embodiments, a preset reduction rate can be determined according to at least one of load, braking force, force direction correction parameter, road adhesion coefficient, and tire stiffness of the wheel. A preset increase rate can be determined according to at least one of load, braking force, force direction correction parameter, road adhesion coefficient, and tire stiffness of the wheel. Wherein, the force direction correction parameter can be determined according to a sideslip angle of the wheel and a sideslip angle of the vehicle's center of mass.

In some embodiments, the preset reduction rate is greater than the preset increase rate.

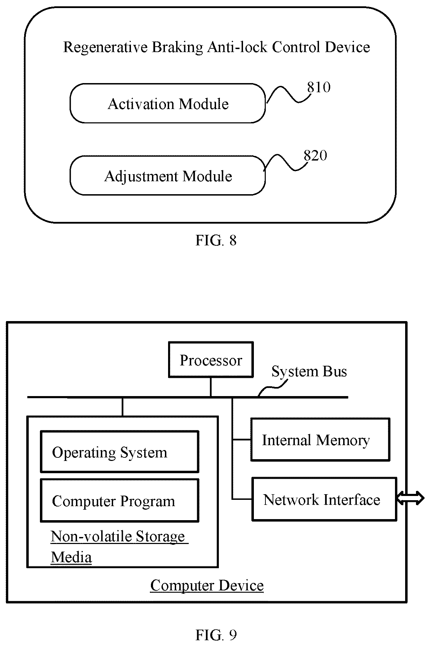

In the embodiment of the present specification, a regenerative braking anti-lock control device for a vehicle is provided. Referring to FIG. 8, the regenerative braking anti-lock control device can comprise an activation module 810 and an adjustment module 820.

Activation module 810 is configured to activate a regenerative braking anti-lock mode in response to the required regenerative torque of the plurality of wheels, the braking state of the hydraulic braking module, and the locking tendency of at least one of the wheels meeting a first preset condition; wherein, the hydraulic braking module comprises a hydraulic anti-lock brake unit, the braking state of the hydraulic braking module comprises the state of the hydraulic anti-lock brake unit, and the first preset condition comprises: the state of the hydraulic anti-lock brake unit is in a fault state;

Adjustment module 820 is configured to adjust the actual regenerative torque outputted by a motor according to the locking tendency and the required regenerative torque of the wheel in response to the regenerative braking anti-lock mode being in an activated state.

As for the specific definition of the regenerative braking anti-lock control device, please refer to the above definition of the regenerative braking anti-lock control method, which will not be described in detail here. Each module in the above-mentioned regenerative braking anti-lock control device can be implemented in whole or in part by software, hardware, and a combination thereof. The above-mentioned modules can be embedded in or independent of the processor in the computer device in the form of hardware, or can be stored in the memory of the computer device in the form of software, so that the processor can invoke and execute the operations corresponding to the above modules.

An embodiment of the present specification also provides a vehicle, which can comprise any of the above-mentioned regenerative braking anti-lock control systems for a vehicle. The beneficial effects of the vehicle are the same as those of the above-mentioned regenerative braking anti-lock control systems for a vehicle, which will not be described in detail here.

An embodiment of the present specification provides a computer device, comprising a processor, a memory, and a computer program stored in the memory and configured to be executed by the processor, the steps of the method described in any of the above embodiments can be implemented when the processor executes the computer program.

An embodiment of the present specification provides a computer-readable storage medium on which a computer program is stored, the steps of the method described in any of the above embodiments can be implemented when the computer program is executed by the processor.

An embodiment of the present specification provides a computer program product, which comprises instructions, a computer device can perform the steps of the method described in any of the above embodiments when the instructions are executed by a processor of the computer device.

In one embodiment, a computer device is provided, which can be a server, and its internal structure diagram can be shown in FIG. 9. The computer device comprises a processor, a memory, and a network interface connected via a system bus, wherein, the processor of the computer device is configured to provide computing and control capabilities. The memory of the computer device comprises a non-volatile storage medium and an internal memory. The non-volatile storage medium stores an operating system and a computer program. The internal memory provides an environment for the operation of the operating system and the computer program in the non-volatile storage medium. The network interface of the computer device is configured to communicate with an external terminal via a network connection. The method described in any of the above embodiments can be implemented when the computer program is executed by the processor.

A person skilled in the art will understand that the structure shown in FIG. 9 is merely a block diagram of a partial structure related to the scheme of the present disclosure and does not constitute a limitation to the computer device where the scheme of the present disclosure is applied. The specific computer device can comprise more or fewer components than those shown in the figure, or combine certain components, or have a different arrangement of components.

A person skilled in the art will understand that all or part of the processes of the method in the above-mentioned embodiment can be implemented by instructing the corresponding hardware through a computer program, the computer program can be stored in a non-volatile computer-readable storage medium, and the computer program includes the processes of the method in the above-mentioned embodiment when it is executed. Wherein, any reference to memory, storage, database, or other media used in the embodiments provided by the present disclosure can comprise at least one of non-volatile and volatile memory. Non-volatile memory can comprise read-only memory (ROM), magnetic tape, floppy disk, flash memory, or optical memory, etc. Volatile memory can comprise random access memory (RAM) or external cache memory. As an illustration and not limitation, RAM can be in various forms, such as static random access memory (SRAM) or dynamic random access memory (DRAM), etc.

The technical features of the above embodiments can be arbitrarily combined. Not all possible combinations of the technical features in the above embodiments are described to ensure the description concise. However, as long as there is no contradiction in the combination of these technical features, they should be considered to be within the scope of this specification.

In the description of this specification, the description with reference to the terms "one embodiment", "some embodiments", "examples", "specific examples", or "some examples" means that the specific features, structures, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics can be combined in any one or more embodiments or examples in a suitable manner.

In addition, the terms "first" and "second" are used for descriptive purposes only and will not be understood as indicating or implying relative importance or indicating the number of the corresponding technical features implicitly. Thus, a feature defined as "first" or "second" can comprise at least one of the features explicitly or implicitly. In the description of the present disclosure, "a plurality of" means two or more, unless there is another clear and specific limitation.

In the present disclosure, unless otherwise clearly specified and limited, the terms "installed", "connected", "connected", "fixed", etc. will be understood in a broad sense. For example, they can be fixed connections, detachable connections, or integral connections; they can be mechanical connections or electrical connections; they can be direct connections or indirect connections through an intermediate medium; they can be internal connections between two elements or interaction relationships between two elements, unless there is another clear limitation. A person skilled in the art can understand the specific meanings of the above terms in the present disclosure according to specific circumstances.

Although the embodiments of the present disclosure have been shown and described above, it is to be understood that the above embodiments are illustrative and are not to be construed as limitations of the present disclosure. A person skilled in the art can change, modify, replace, and vary the above embodiments within the scope of the present disclosure.

## Claims

1. A regenerative braking anti-lock control method for a vehicle, wherein, the vehicle comprises a plurality of wheels, a plurality of motors and a hydraulic brake module, each of the motors is configured to drive one of the wheels, and the method comprising:
in response to a required regenerative torque of the plurality of wheels, a braking state of the hydraulic brake module, and a locking tendency of at least one of the wheels meeting a first preset condition, activating a regenerative braking anti-lock mode; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state;
adjusting the actual regenerative torque outputted by the motor according to the locking tendency and the required regenerative torque of the wheel in response to the regenerative braking anti-lock mode being in an activated state.

2. The method according to claim 1, wherein, the braking state of the hydraulic brake module further comprises a braking demand of a driver; any one of the following situations meets the first preset condition:
(1) a sum of the required regenerative torques of the plurality of wheels is greater than zero, the locking tendency of the wheel tends to lock up, and the braking demand of the driver is less than or equal to a preset braking demand threshold;
(2) the sum of the required regenerative torques of the plurality of wheels is greater than zero, the locking tendency of the wheel tends to lock up, and the braking demand of the driver is greater than a preset braking demand threshold and the state of the hydraulic anti-lock brake unit is in a fault state.

3. The method according to claim 2, wherein,
the braking demand of the driver comprises a brake pedal depth; the preset braking demand threshold comprises a preset brake pedal depth threshold;
or, the braking demand of the driver comprises a brake pedal force; the preset braking demand threshold comprises a preset brake pedal force threshold;
or, the braking demand of the driver is determined according to the brake pedal depth and the brake pedal force.

4. The method according to claim 2, wherein, the method further comprising:
in response to the regenerative braking anti-lock mode being in an activated state, and the required regenerative braking torque of the wheel, vehicle speed, the braking state, and the locking tendency of the wheel meeting a second preset condition, exiting the regenerative braking anti-lock mode.

5. The method according to claim 4, wherein, any one of the following situations meets the second preset condition:
the sum of the required regenerative torques of the plurality of wheels is zero;
the vehicle speed is less than a preset exit speed threshold;
the braking demand of the driver is greater than or equal to a preset braking demand threshold, and the hydraulic anti-lock brake unit is in a normal state;
the locking tendency of the wheel does not tend to lock up.

6. The method according to any one of claims 2 to 5, wherein, the method further comprises:
determining the locking tendency of the plurality of wheels according to the required braking force of the plurality of wheels and the maximum road adhesion of the plurality of wheels.

7. The method according to claim 6, wherein, determining the locking tendency of the plurality of wheels according to the required braking force of the plurality of wheels and the maximum road adhesion of the plurality of wheels, comprising:
determining the locking tendency of the wheel as not tending to lock up in response to the required braking force of any of the wheels being less than the corresponding maximum road adhesion.

8. The method according to claim 6, wherein, the method further comprising:
determining the required braking force of the plurality of wheels according to the current weight and preset deceleration of the vehicle in response to the regenerative braking anti-lock mode being in an activated state.

9. The method according to claim 8, wherein, the plurality of wheels comprise two front axle wheels and two rear axle wheels; determining the required braking force of the plurality of wheels according to the current weight and preset deceleration of the vehicle, comprising:
determining the sum of the required braking forces of the plurality of wheels according to the current weight and preset deceleration of the vehicle, and distributing the sum of the required braking forces to the plurality of wheels evenly;
or,
determining the sum of the required braking forces of the plurality of wheels according to the current weight and preset deceleration of the vehicle, determining a first distribution ratio according to the current weight and preset deceleration of the vehicle, determining the sum of the required braking forces of the two front axle wheels and the sum of the required braking forces of the two rear axle wheels according to the first distribution ratio and the sum of the required braking forces of the plurality of wheels, distributing the sum of the required braking forces of the two front axle wheels to the two front axle wheels evenly, and distributing the sum of the required braking forces of the two rear axle wheels to the two rear axle wheels evenly.

10. The method according to claim 9, wherein, the method further comprising:
determining the required regenerative torque of the plurality of wheels according to the required braking force of the plurality of wheels and the braking demand of the driver.

11. The method according to any one of claims 2 to 5, wherein, the method further comprising:
determining the locking tendency of a wheel according to one or more of wheel slip ratio, wheel deceleration, and wheel deceleration change rate of any wheel.

12. The method according to claim11, wherein, determining the locking tendency of the wheel according to wheel slip ratio and/or wheel deceleration of any wheel, comprising:
determining the locking tendency of the wheel as tending to lock up in response to the slip ratio of any wheel being greater than or equal to a first slip ratio threshold;
determining the locking tendency of the wheel as tending to lock up in response to the deceleration of any wheel being less than or equal to a first deceleration threshold;
determining the locking tendency of the wheel as tending to lock up in response to the deceleration change rate of any wheel being less than or equal to a deceleration change rate threshold;
determining the locking tendency of the wheel as tending to lock up in response to the slip ratio of any wheel being greater than or equal to a second slip ratio threshold and the wheel deceleration is less than or equal to a second deceleration threshold;
wherein, the first slip ratio threshold is greater than the second slip ratio threshold, and the first deceleration threshold is less than the second deceleration threshold.

13. The method according to claim 11, wherein, the method further comprising:
determining a wheel speed of a wheel corresponding to the motor according to the motor speed of any motor;
determining a wheel slip ratio of a wheel corresponding to the motor according to wheel speed and vehicle speed.

14. The method according to claim 1, wherein, in response to the regenerative braking anti-lock mode being in an activated state, adjusting the required regenerative torque according to the locking tendency of the wheel, comprising:
in response to the regenerative braking anti-lock mode being in an activated state, reducing the actual regenerative torque according to a preset reduction rate until the locking tendency of the wheel is adjusted from tending to lock up to not tending to lock up.

15. The method according to claim 14, wherein, the method further comprising:
in response to the locking tendency of the wheel being adjusted from tending to lock up to not tending to lock up, stopping the reduction of the required regenerative torque and maintaining it for a preset time;
in response to the locking tendency of the wheel remaining not tending to lock up within the preset time, increasing the actual regenerative torque according to a preset increase rate until the locking tendency of the wheel is tending to lock up or the actual regenerative torque is greater than or equal to the required regenerative torque.

16. The method according to claim 15, wherein, a preset reduction rate is determined according to at least one of load, braking force, force direction correction parameter, road adhesion coefficient, and tire stiffness of the wheel; a preset increase rate is determined according to at least one of load, braking force, force direction correction parameter, road adhesion coefficient, and tire stiffness of the wheel; wherein, the force direction correction parameter is determined according to a sideslip angle of the wheel and a sideslip angle of the vehicle's center of mass.

17. The method according to claim 15, wherein, the preset reduction rate is greater than the preset increase rate.

18. A regenerative braking anti-lock control device for a vehicle, the vehicle comprises a plurality of wheels, a plurality of motors and a hydraulic brake module, each of the motors is configured to drive one of the wheels, and the device comprising:
an activation module, which is configured to activate a regenerative braking anti-lock mode in response to the required regenerative torque of the plurality of wheels, a braking state of the hydraulic brake module, and a locking tendency of at least one of the wheels meeting a first preset condition; wherein, the hydraulic brake module comprises a hydraulic anti-lock brake unit, the braking state of the hydraulic brake module comprises the state of a hydraulic anti-lock brake unit, and the first preset condition comprises: the state of the hydraulic anti-lock brake unit is in a fault state;
an adjustment module, which is configured to adjust the actual regenerative torque outputted by a motor according to the locking tendency and the required regenerative torque of the wheel in response to the regenerative braking anti-lock mode being in an activated state.

19. A regenerative braking anti-lock control system for a vehicle, comprising: a plurality of wheels, a plurality of motors and a hydraulic brake module of the vehicle, each of the motors is configured to drive one of the wheels, and the regenerative braking anti-lock control system is configured to implement the regenerative braking anti-lock control methods according to any one of claims 1 to 17.

20. A vehicle, comprising the regenerative braking anti-lock control system for a vehicle according to claim 19.
